# DEMANDE DE BREVET EUROPEEN

(11) **EP 1 875 847 A1**
(43) Date de publication de la demande: **09.01.2008**
(21) Numéro de dépôt: 07290836.1
(22) Date de dépôt: 03.07.2007
(51) Int. Cl.: A47L 9/10, B01D 45/14

(54) **Appareil de séparation, par aspiration, de poussières dans un gaz**

(30) Priorité: 03.07.2006 FR 0605987
(71) Demandeur: AMPHORA SAS, 51100 Reims (FR)
(72) Inventeur: Orban, Pierre, 51100 Reims (FR)
(74) Mandataire: Debay, Yves

(57) **Abrégé**

Appareil de séparation, par aspiration, (1) de particules, comprenant une enceinte (2) de stockage, munie d'une première ouverture (5) à laquelle est connectée une gaine (7) d'aspiration, d'une deuxième ouverture (6) protégée par un premier filtre (35) constitué par une grille et utilisée pour mettre l'enceinte en dépression, les deux ouvertures étant disposées sur la partie supérieure de l'enceinte, d'une enceinte (3) de filtration et un dispositif d'aspiration (4) relié à la partie supérieure de l'enceinte de filtration (3) permettant de mettre en dépression l'enceinte de stockage (2) et l'enceinte de filtration (3) caractérisé en ce que l'enceinte (3) de filtration comporte une hélice (32) fixée sur un axe (36) et entraînée en rotation, cette hélice entraînant en rotation au moins une turbine (33) centrifuge fixée sur le même axe au dessus du premier filtre (35), permettant de centrifuger les particules aspirées et des moyens (34) de récupération des particules centrifugées.

## Description

La présente invention concerne un appareil de séparation de particules et plus particulièrement un appareil de séparation, par aspiration, de poussières dans un gaz.

Il est déjà connu des dispositifs permettant l'aspiration de particules. Ces dispositifs permettent d'aspirer des particules grâce à un système d'aspiration monté sur une enceinte de stockage, par exemple un bidon La demanderesse commercialise actuellement un produit destiné notamment à l'aspiration des cendres. Le produit est constitué d'un bidon comprenant un couvercle muni de deux ouvertures, une première ouverture à laquelle est connectée une gaine d'aspiration équipée aux extrémités par exemple d'un embout-suceur et d'une deuxième ouverture protégée par un premier filtre constitué par une grille et utilisée pour mettre l'enceinte en dépression, les deux ouvertures étant disposées sur la partie supérieure de l'enceinte. Ce dispositif comporte également une enceinte de filtration comprenant dans sa partie inférieure une mousse à cellules ouvertes constituant un deuxième filtre à trois dimensions et un dispositif d'aspiration, relié à la partie supérieure de l'enceinte de filtration permettant de mettre en dépression l'enceinte de stockage et l'enceinte de filtration. De cette façon, lors de la mise en marche du dispositif d'aspiration, l'air est aspiré par l'extrémité libre de la gaine d'aspiration, et traverse successivement le premier filtre, la mousse à cellules ouvertes et un troisième filtre constitué d'une feuille de papier, ce dernier étant disposé dans l'enceinte de filtration au-dessus du deuxième filtre ou à l'entrée du dispositif de d'aspiration. La succession des premier, deuxième et troisième filtres permet d'arrêter des particules de tailles décroissantes, avant que l'air ne soit ensuite expulsé par une sortie d'évacuation du dispositif d'aspiration. Ce dispositif permet ainsi de séparer des particules de l'air aspiré. L'inconvénient de ce type de dispositif est qu'au bout d'un certain temps d'utilisation les filtres vont être saturés et diminuer la puissance de l'aspiration.

Pour remédier à ce problème il existe actuellement d'autre type de dispositifs.

On peut citer notamment la demande de brevet FR 2 829 706 qui décrit un séparateur de phases gazeuse et liquide, comprenant une enceinte de stockage avec une entrée du mélange diphasique à séparer, formé par du gaz et du liquide, une sortie de gaz et une sortie de liquide, et une structure hydrophile disposée dans le corps et délimitant un espace intérieur et un espace extérieur de ce corps. Ce séparateur comporte également des moyens permettant de créer des tourbillons dans le mélange diphasique lorsque celui-ci s'écoule dans l'espace intérieur de manière à récupérer le liquide contre les parois de ladite structure hydrophile. La sortie de gaz est en communication avec l'espace intérieur et la sortie de liquide est en communication avec l'espace extérieur. Les moyens permettant de créer des tourbillons sont formés d'une hélice qui tourne sous l'effet de l'air aspiré. Le mélange aspiré passe donc à travers une hélice et grâce aux tourbillons créés par le passage dans l'hélice va être plaqué contre la paroi hydrophile absorbant l'eau qui sera ensuite évacuée par la sortie liquide. Ce dispositif sépare donc uniquement un mélange diphasique.

On peut citer également la demande de brevet WO 03 030 703 qui décrit un séparateur à effet cyclone pour aspirateur. Ce séparateur comprend un corps de cyclone, un générateur de flux disposé dans le corps, un suppresseur de flux permettant de stopper au moins une partie des particules se trouvant dans l'air aspiré, et un collecteur de particules. Le générateur de flux est constitué par une hélice, comportant trois pales, qui tourne sous la force de l'air aspiré. L'air aspiré arrive ainsi par un conduit et traverse l'hélice qui en tournant va centrifuger les particules contenues dans l'air aspiré. Les plus grosses particules restent proches de l'axe central du corps de cyclone alors que les petites particules sont projetées contre les parois du corps de cyclone. Les grosses particules passent à travers le suppresseur de flux et ressortent par son autre extrémité pour se retrouver dans le sac de l'aspirateur. Les petites particules sous l'effet de la force centrifuge arrivent dans le collecteur de particules.

Un inconvénient de ce dispositif est qu'il nécessite l'utilisation d'un sac à aspirateur ce qui va réduire la puissance de l'aspiration malgré la présence de l'hélice.

Un autre inconvénient de ces dispositifs est qu'ils ne permettent pas de pré-filtrer l'air, et de ce fait l'aspiration de trop grosses particules va réduire l'efficacité de l'aspiration.

Un autre inconvénient est qu'il ne dispose pas de réceptacle à particules sous l'hélice pour récupérer les poussières et éviter qu'elles ne se dispersent dans l'appareil.

Un premier but de l'invention est de proposer un appareil d'aspiration palliant les inconvénients de l'art antérieur qui soit adapté pour l'aspiration et la séparation de particules.

Ce but est atteint par un appareil de séparation, par aspiration, de particules, comprenant une enceinte de stockage, munie d'une première ouverture à laquelle est connectée une gaine d'aspiration, d'une deuxième ouverture protégée par un premier filtre constitué par une grille et utilisée pour mettre l'enceinte en dépression, les deux ouvertures étant disposées sur la partie supérieure de l'enceinte, d'une enceinte de filtration et un dispositif d'aspiration relié à la partie supérieure de l'enceinte de filtration permettant de mettre en dépression l'enceinte de stockage et l'enceinte de filtration caractérisé en ce que l'enceinte de filtration comporte une hélice fixée sur un axe et entraînée en rotation, cette hélice entraînant en rotation au moins une turbine centrifuge fixée sur le même axe au dessus du premier filtre, permettant de centrifuger les particules aspirées et des moyens de récupération des particules centrifugées.

Selon une autre particularité, l'hélice est fixée sur un axe entraînant au moins deux turbines centrifuges.

Selon une autre particularité, les moyens de récupérations des particules centrifugés sont formés par une cassette de récupération disposée sous la turbine.

Selon une autre particularité, la cassette de récupération de particules comporte sur l'intérieur de la paroi formant sa périphérie des compartiments dans lesquels vont se loger les particules centrifugées.

Selon une autre particularité, le premier filtre est constitué d'une grille métallique dont les mailles empêchent le passage des particules de taille supérieure à 500 microns

Selon une autre particularité, l'enceinte de filtration est disposée à l'extérieur de l'enceinte de stockage et connectée à la deuxième ouverture de l'enceinte de stockage par sa partie inférieure et au dispositif d'aspiration par sa partie supérieure.

Selon une autre particularité, l'enceinte de filtration est disposée à l'intérieur de l'enceinte de stockage, et est connectée à la deuxième ouverture de l'enceinte de stockage par sa partie supérieure, sa partie inférieure présentant une ouverture devant laquelle est disposé le premier filtre, le dispositif d'aspiration étant relié à la deuxième ouverture de l'enceinte de stockage.

Selon une autre particularité, le dispositif d'aspiration est constitué par un aspirateur ménager.

Selon une autre particularité, l'enceinte de filtration est formée d'un récipient muni d'un moyen de connexion à la deuxième ouverture de l'enceinte de stockage, entouré d'une paroi latérale circulaire, un support, servant de base au dispositif d'aspiration et de support à l'axe portant l'hélice et la turbine.

Selon une autre particularité, le dispositif d'aspiration, solidaire de l'enceinte de filtration, est constitué d'un moteur entraînant des pales disposées dans un carter central pour créer un flux d'aspiration par l'ouverture de la plaque support.

Un autre but de l'invention est de proposer une utilisation de l'enceinte de filtration dans un système d'aspiration.

D'autres particularités et avantages de la présente invention apparaîtront plus clairement à la lecture de la description ci-après faite en référence aux dessins annexés dans lesquels :
- la figure 1 représente une vue schématique de l'appareil selon l'invention ;
- la figure 2 représente une vue éclatée de dessus en élévation de l'appareil selon l'invention ;
- la figure 3 représente une vue éclatée de dessous en élévation de l'appareil selon l'invention;

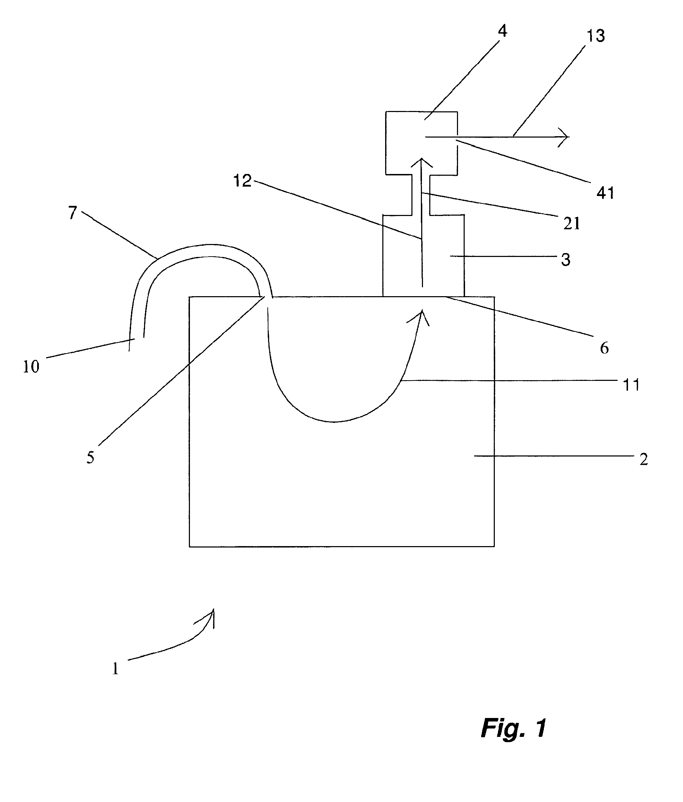

Suivant la figure 1, l'appareil d'aspiration (1) selon l'invention comprend une enceinte de stockage (2) reliée à une enceinte de filtration (3) disposée hors de l'enceinte de stockage, elle-même reliée à un dispositif d'aspiration d'aspiration (4).

L'enceinte (2) de stockage présente deux ouvertures (5, 6) sur sa partie supérieure. Celles-ci sont par exemple disposées sur la paroi supérieure de l'enceinte de stockage. Un conduit flexible (7), par exemple métallique, est connecté par une de ses extrémités sur la première ouverture (5), tandis que la deuxième ouverture (6) permet la connexion à l'enceinte de filtration (3). L'extrémité libre du conduit (7) peut être munie d'un embout en forme de bec facilitant l'aspiration. La deuxième (6) ouverture est munie d'une grille (35), par exemple métallique, constituant un premier filtre (35). Les différentes connexions sont réalisées de manière étanche. Les flèches référencées par les numéros (11, 12 et 13) représentent la circulation de l'air dans l'appareil d'aspiration (1).

La mise en marche du dispositif d'aspiration (4) permet de mettre en dépression les deux enceintes (2, 3) afin d'aspirer l'air par l'extrémité libre (10) du conduit flexible (7) et de l'extraire par une sortie (41) d'évacuation, l'air passant (12, 13) à travers le premier filtre (35) et l'enceinte de filtration (3).

Le premier (35) filtre formé est formé par une grille métallique qui présente des mailles dont la taille permet de filtrer les particules supérieures à une taille définie, par exemple 500 microns. Ce premier filtre est fixé sur l'ouverture de l'enceinte de stockage grâce à une bague (351).

Suivant un autre mode de réalisation non représenté, l'enceinte de filtration (3) peut se situer à l'intérieur de l'enceinte de stockage (2). La partie inférieure de l'enceinte de filtration présente une ouverture, munie du premier filtre (8) constitué par une grille métallique. La partie supérieure de l'enceinte de filtration est reliée à la partie inférieure d'un dispositif d'aspiration (4) par l'intermédiaire de la deuxième ouverture (6) de l'enceinte de stockage. La circulation de l'air dans l'appareil d'aspiration (1) et sa filtration à travers successivement le premier (35) filtre et l'enceinte (3) de filtration s'effectuent de la même façon que dans le premier mode de réalisation

Le dispositif d'aspiration (4) peut être constitué par un simple moteur électrique ou par un aspirateur ménager classique.

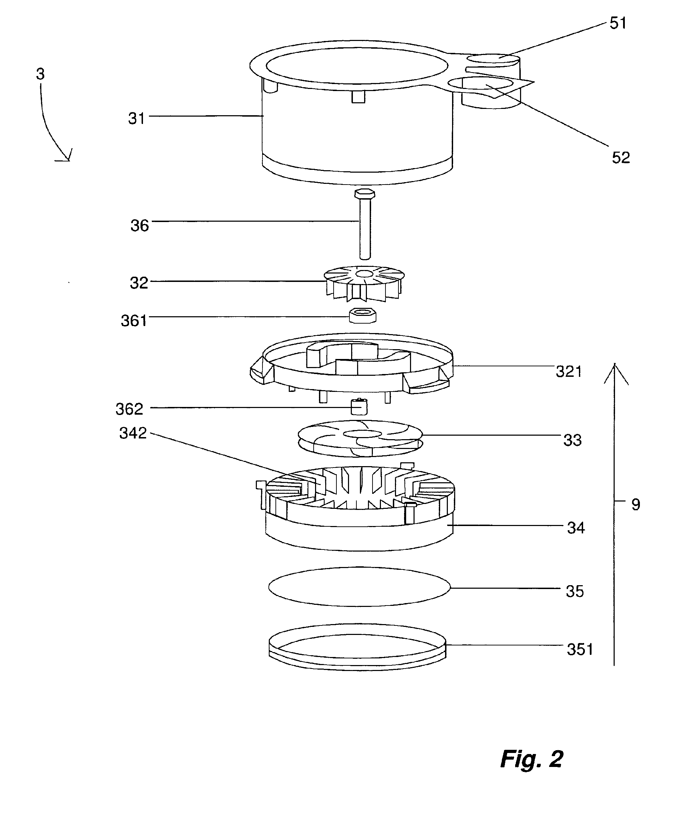

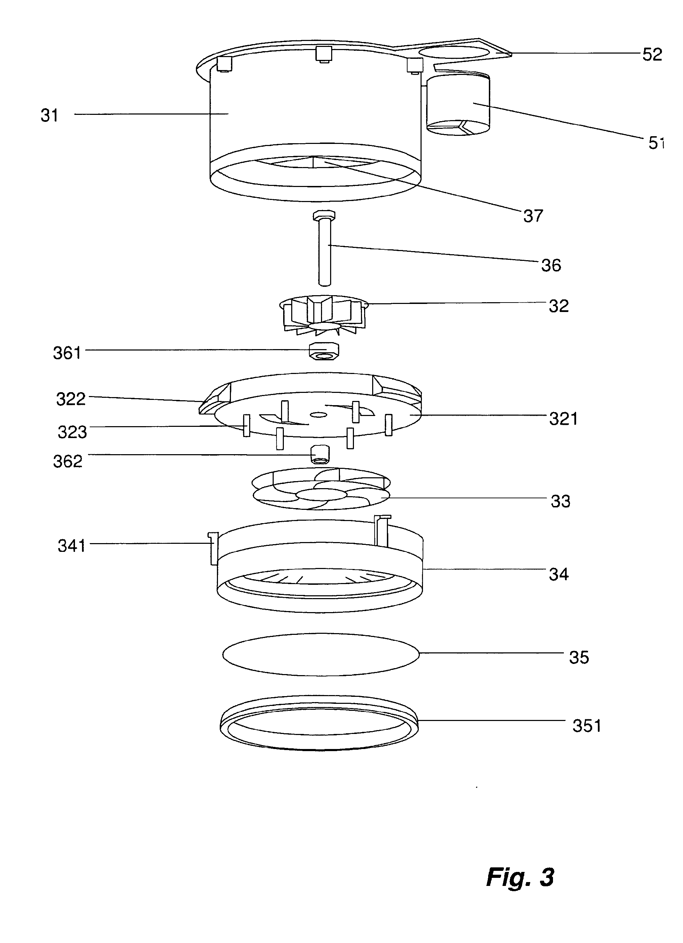

Comme illustré sur les figures 2 et 3, l'enceinte de filtration (3) est constituée d'un récipient (31) présentant une paroi latérale. L'enceinte est par exemple de forme cylindrique. Le fond ouvert de l'enceinte de filtration présente un moyen de connexion, tel que par exemple un conduit ouvert vers l'extérieur, destiné à établir la connexion de l'enceinte de filtration (3) à l'enceinte de stockage (2).

Un support (37) disposé dans l'enceinte servant de base aux moyens de filtration est positionné au milieu de l'enceinte. Le support est constitué d'une plaque munie d'une ou plusieurs ouvertures qui la traversent de part en part. Les dimensions de la plaque correspondent sensiblement au diamètre intérieur de l'enceinte.

L'enceinte (3) de filtration est constituée à l'intérieur de son récipient d'une hélice (32) fixée sur un axe (36) entraînant au moins une turbine (33) centrifuge fixée sur le même axe au-dessus du premier filtre, permettant de centrifuger les particules aspirées. Sous la turbine (33) sont disposés des moyens de récupération par gravité des particules centrifugées. Ces moyens de récupération sont formés par une cassette (34) de récupération disposée sous la turbine.

Cette cassette (34) comporte comme illustré sur la figure 2 sur l'intérieur de la paroi formant sa périphérie des cloisons orientées radialement pour former des compartiments (341) dans lesquels vont se loger les particules centrifugées.

L'hélice (32) est montée de façon à pouvoir tourner dans un plateau (312) pourvu d'une ou plusieurs ouvertures de passage du flux du mélange aspiré et situé au-dessus de la turbine (33), qui va tourner avec l'hélice.

L'enceinte (3) de filtration est donc disposée au-dessus d'un premier filtre (35). Directement au-dessus du premier filtre est disposée la cassette (34) de récupération des particules. Au-dessus de la cassette (34) se trouve une turbine (33) et au-dessus de la turbine est disposée l'hélice (32).

L'ensemble de ces éléments est fixé sur un axe (36) en forme de tige qui va dans une première variante de réalisation leur permettre de tourner par la force de l'aspiration produite par le dispositif d'aspiration. Pour permettre à l'hélice (32) et à la turbine (33) de tourner sans être en contact, l'hélice (32) est montée à rotation sur le plateau (321) grâce à des moyens de fixations de type écrou ou entretoise (361) serrant l'hélice sur la tête de l'axe (36). L'axe passe par un orifice central du plateau (321) et la turbine est également montée serrée sur l'axe et maintenue à distance du plateau par un deuxième écrou ou entretoise (362) à travers lequel passe également l'axe (36). L'autre extrémité de l'axe (36) se termine dans la cassette (34) de récupération.

Le plateau (321) et la casette (34) comportent des moyens de fixations (322, 341) coopérant entre eux. Ces moyens vont permettre de maintenir fixés entre eux le plateau (321) et la cassette (34). La turbine (33) se retrouve donc protégée par l'ensemble formé par le plateau (321) et la cassette(34). Le plateau (321) comporte également des plots (323) qui permettent, lorsqu'il est assemblé avec la cassette (34), de laisser un espace libre suffisant pour la turbine.

L'axe (36) a une extrémité fixée au support disposé dans le récipient de l'enceinte de filtration.

Dans un autre mode de réalisation l'hélice est fixée sur un axe entraînant au moins deux turbines.

Dans un autre mode de réalisation l'hélice est fixée sur un axe entraînant plus de deux turbines.

Le récipient (31) de l'enceinte de filtration comporte des moyens (52) de fixation du conduit flexible (7). Ces moyens sont en forme d'anneau dans lequel peut être insérer le conduit.

Le récipient (31) comporte également un logement (51) pour une soupape anti-dépression (non représentée) qui va être utilisée lorsque le dispositif ne doit plus être en dépression.

Ces deux éléments (51, 52) sont fixés, ou directement moulés avec le récipient (31), sur le bord supérieur du récipient (31).

Le dispositif d'aspiration (4), constitué d'un moteur entraînant des pales disposées dans un carter central non représenté est positionné sur la partie supérieure de l'enceinte (3) de telle sorte que la mise en marche du moteur puisse mettre l'enceinte (3) de filtration en dépression, en aspirant l'air par les ouvertures de la plaque support, les pales évacuant par exemple l'air latéralement par une sortie (41).

La flèche référencée par le numéro (9) sur la figure 2 illustre le mouvement de l'air aspiré par le moteur à travers l'enceinte de filtration.

L'air est aspiré à travers le premier filtre, puis est aspiré à travers la cassette. Au niveau de la turbine, qui tourne grâce à l'hélice, les particules sont centrifugées et retombent dans la cassette. L'air est ensuite expulsé par une sortie du moteur d'aspiration.

A titre d'exemple, l'enceinte de stockage peut être constituée par le produit commercialisé par la demanderesse et décrit précédemment, les dimensions de l'enceinte de filtration et du moteur sont alors adaptées au produit existant.

Après chaque utilisation, l'utilisateur peut extraire facilement la cassette de l'enceinte de filtration pour la nettoyer à l'eau, afin d'extraire les particules piégées. L'appareil d'aspiration peut être utilisé pour nettoyer les cendres provenant d'une cheminée, d'un insert, poêle ou chaudière par exemple.

Le volume de l'enceinte de stockage, par exemple de 20 litres, permet de stocker une quantité importante de particules ou cendres. De plus il n'est pas nécessaire de changer le filtre, un simple nettoyage de celui-ci assure une filtration efficace. L'appareil d'aspiration selon l'invention peut également être utilisé pour le nettoyage de grandes surfaces telles que les ateliers, greniers sous-sols, ...

Il doit être évident pour l'homme du métier que la présente invention permet des modes de réalisation sous de nombreuses autres formes spécifiques sans l'éloigner du domaine d'application de l'invention comme revendiquée. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

**1.** Appareil de séparation, par aspiration, (1) de particules, comprenant une enceinte (2) de stockage, munie d'une première ouverture (5) à laquelle est connectée une gaine (7) d'aspiration, d'une deuxième ouverture (6) protégée par un premier filtre (35) constitué par une grille et utilisée pour mettre l'enceinte en dépression, les deux ouvertures étant disposées sur la partie supérieure de l'enceinte, d'une enceinte (3) de filtration et un dispositif d'aspiration (4) relié à la partie supérieure de l'enceinte de filtration (3) permettant de mettre en dépression l'enceinte de stockage (2) et l'enceinte de filtration (3) **caractérisé en ce que** l'enceinte (3) de filtration comporte une hélice (32) fixée sur un axe (36) et entraînée en rotation, cette hélice entraînant en rotation au moins une turbine (33) centrifuge fixée sur le même axe au dessus du premier filtre (35), permettant de centrifuger les particules aspirées et des moyens (34) de récupération des particules centrifugées.

**2.** Appareil de séparation, par aspiration, (1) de particules selon la revendication 1 **caractérisé en ce que** l'hélice (32) est fixée sur un axe entraînant au moins deux turbines (33) centrifuges.

**3.** Appareil de séparation, par aspiration, (1) de particules selon la revendication 1 ou 2 **caractérisé en ce que** les moyens (34) de récupérations des particules centrifugés sont formés par une cassette (34) de récupération disposée sous la turbine (33).

**4.** Appareil de séparation, par aspiration, (1) de particules selon la revendication 1 à 3 **caractérisé en ce que** la cassette (34) de récupération de particules comporte sur l'intérieur de la paroi formant sa périphérie des compartiments (342) dans lesquels vont se loger les particules centrifugées.

**5.** Appareil d'aspiration (1) selon l'une des revendications précédentes, **caractérisé en ce que** le premier (35) filtre est constitué d'une grille métallique dont les mailles empêchent le passage des particules de taille supérieure à 500 microns

**5.** Appareil d'aspiration (1) de particules selon l'une des revendications 1 à 4, **caractérisé en ce que** l'enceinte (3) de filtration est disposée à l'extérieur de l'enceinte de stockage (3) et connectée à la deuxième ouverture (6) de l'enceinte de stockage par sa partie inférieure et au dispositif d'aspiration par sa partie supérieure.

**6.** Appareil d'aspiration (1) de particules, l'une des revendications 1 à 4, **caractérisé en ce que** l'enceinte (3) de filtration est disposé à l'intérieur de l'enceinte de stockage, et est connectée à la deuxième ouverture (6) de l'enceinte de stockage par sa partie supérieure, sa partie inférieure présentant une ouverture devant laquelle est disposée le premier filtre (35), le dispositif d'aspiration (4) étant relié à la deuxième ouverture (6) de l'enceinte de stockage (2).

**6.** Appareil d'aspiration de particules, selon l'une des revendications précédentes, **caractérisé en ce que** le dispositif d'aspiration (4) est constitué par un aspirateur ménager.

**7.** Appareil d'aspiration (1) selon l'une des revendications 1 à 6, **caractérisé en ce que** l'enceinte de filtration (3) est formée d'un récipient muni d'un moyen de connexion à la deuxième ouverture (6) de l'enceinte de stockage, entouré d'une paroi latérale (31) circulaire, un support (37), servant de base au dispositif d'aspiration et de support à l'axe portant l'hélice et la turbine.

**8.** Appareil d'aspiration (1) selon une des revendications 1 à 7, **caractérisé en ce que** le dispositif (4) d'aspiration, solidaire de l'enceinte (3) de filtration, est constitué d'un moteur entraînant des pales disposées dans un carter central pour créer un flux d'aspiration par l'ouverture de la plaque support.

**9.** Utilisation de l'enceinte (3) de filtration selon une des revendications 1 à 8 dans un système (1) d'aspiration.
